# EUROPÄISCHE PATENTSCHRIFT

(11) **EP 1 369 622 B1**
(45) Veröffentlichungstag und Bekanntmachung des Hinweises auf die Patenterteilung: **28.04.2010**
(21) Anmeldenummer: 03005864.8
(22) Anmeldetag: 15.03.2003
(51) Int. Cl.: F16H 7/12

(54) **Spanneinrichtung für Zugmittel, insbesondere Riemenspanneinrichtung**
Tensioner for an endless member, particulary a belt tensioner
Tendeur pour moyen d'entraînement, en particulier tendeur de courroie

(30) Priorität: 07.06.2002 DE 10225617
(43) Veröffentlichungstag der Anmeldung: 10.12.2003
(73) Patentinhaber: Muhr und Bender KG, 57439 Attendorn (DE)
(72) Erfinder: Berndt, Thomas, 56472 Hof (DE); Bonse, Rudolf, Dr.-Ing., 57439 Attendorn (DE); Hamm, Wolfgang, 57520 Mauden (DE); Jud, Joachim, 57567 Daaden (DE); Jung, Manfred, 51503 Rösrath (DE); Muhr, Thomas, Dr.-Ing., 57439 Attendorn (DE); Rohrmann, Jürgen, 57413 Finnentrop (DE)
(74) Vertreter: Gesthuysen, von Rohr & Eggert

(56) Entgegenhaltungen:
- EP-A- 0 114 779
- GB-A- 293 227
- US-A- 4 826 471
- US-A- 4 886 482
- US-A- 5 328 415
- PATENT ABSTRACTS OF JAPAN Bd. 2000, Nr. 23, 10. Februar 2001 (2001-02-10) -& JP 2001 165253 A (KOYO SEIKO CO LTD), 19. Juni 2001 (2001-06-19)
- PATENT ABSTRACTS OF JAPAN Bd. 1996, Nr. 07, 31. Juli 1996 (1996-07-31) -& JP 08 068447 A (NTN CORP), 12. März 1996 (1996-03-12)

## Beschreibung

Die Erfindung betrifft eine Spanneinrichtung für Zugmittel, insbesondere eine Riemenspanneinrichtung, nach dem Oberbegriff des Patentanspruchs 1. US 4 886 482 offenbart eine Spanneinrichtung mit die Merkmale des Oberbegriffs des Anspruchs 1.

In Kraftfahrzeugen werden durch den Fahrzeugmotor verschiedene Nebenaggregate angetrieben, z. B. ein Generator, eine Wasserpumpe für Fahrzeugmotoren mit Wasserkühlung, eine Servopumpe für Kraftfahrzeuge mit Lenkhilfe und ein Kompressor für eine Klimaanlage. Dies geschieht durch eine auf der Kurbelwelle des Fahrzeugmotors sitzende Hauptriemenscheibe und durch einen endlosen Treibriemen, der einerseits über die Hauptriemenscheibe und andererseits über auf den Antriebswellen der Nebenaggregate sitzende Hilfsriemenscheibe läuft. Für die Funktionstüchtigkeit der Nebenaggregate und für die Lebensdauer des Treibriemens ist die Einstellung und die Beibehaltung einer bestimmten Riemenspannung des Treibriemens von besonderer Bedeutung. Zur Verbesserung der Funktionstüchtigkeit der Nebenaggregate und zur Erhöhung der Lebensdauer des Treibriemens wird ganz allgemein eine federbelastete Riemenspanneinrichtung verwendet, die in der Regel eine Dämpfungseinrichtung aufweist, so daß Schlupf und Schwingungen ausgeglichen bzw. vermindert werden können.

In jüngerer Zeit werden sogenannte Riemen-Starter-Generatoren (RSG) - die teilweise auch als Integrierter Starter Generator (ISG) bezeichnet werden - im Riemengetriebe eingesetzt. Hierbei wird der Generator bestromt und als elektrischer Antrieb genutzt. Über den Treibriemen wird die Hauptriemenscheibe und damit die Kurbelwelle des Fahrzeugmotors annähernd auf Leerlaufdrehzahl beschleunigt, woraufhin der Fahrzeugmotor dann gestartet wird. Diese Startphase, in der der Generator als elektrischer Antrieb genutzt wird, dauert in der Regel weniger als eine Sekunde.

Eingangs ist ausgeführt worden, daß die Erfindung eine Spanneinrichtung für Zugmittel betrifft. Zuvor ist nun eine besondere Spanneinrichtung für Zugmittel im einzelnen angesprochen worden, nämlich eine Riemenspanneinrichtung. Im folgenden wird die Spanneinrichtung für Zugmittel, mit der sich die Erfindung befaßt, stets als Riemenspanneinrichtung angesprochen und beschrieben. Das ändert nichts daran, daß die beschriebene Spanneinrichtung für Zugmittel auch anderweitig eingesetzt werden kann, also nicht nur als Riemenspanneinrichtung.

Der grundsätzliche Aufbau von Riemenspanneinrichtungen - Aufnahme- und Befestigungsgehäuse, mit dem Aufnahme- und Befestigungsgehäuse schwenkbar verbundener Rollenträger, den Rollenträger gegenüber dem Aufnahme- und Befestigungsgehäuse in der Regel radial und axial lagerndes Lager, zwischen dem Rollenträger und dem Aufnahme- und Befestigungsgehäuse vorgesehene Feder zum Aufbringen der Spannkraft und ggf. Dämpfungseinrichtung - ist vielfach bekannt, wozu auf die DE 41 34 354, DE 43 36 467, DE 43 00 178, DE 44 27 683, DE 196 03 558 und die EP 0 858 563 verwiesen wird. Wesentliche Unterschiede gibt es vor allem in bezug auf die bei den meisten Riemenspanneinrichtungen verwirklichte Dämpfungseinrichtung.

Aus der DE 42 43 431 ist ein Umschlingungsgetriebe bekannt, bei dem ein Antriebsrad über einen Zahnriemen zwei Abriebsräder zweier Nockenwellen antreibt, wobei - wie allgemein üblich - zur Erzeugung der notwendigen Riemenspannung ein Riemenspanner innerhalb des Leertrums angeordnet ist. Zur Verringerung der auf den Zahnriemen wirkenden Spannungsspitzen im Bereich von Resonanzpunkten ist bei diesem Umschlingungsgetriebe im Zugtrum - der häufig auch als Lasttrum bezeichnet wird - eine weitere, elastisch abgestützte Spannrolle vorgesehen. Durch diese zweite Spannrolle soll ein schnelles Ermüden des Zahnriemens dadurch verhindert werden, daß Spannungsausschläge am Zahnriemen in beiden Richtungen begrenzt abgefedert und gedämpft werden.

Wird eine Riemenspanneinrichtung, die sich im Normalbetrieb im Leertrum zwischen dem Fahrzeugmotor und dem Generator befindet, in Verbindung mit einem Riemen-Starter-Generator verwendet, so führt der Einsatz des Generators als elektrischer Antrieb dazu, daß aus dem Leertrum der Lasttrum bzw. Zugtrum wird. Dies führt dann dazu, daß die Riemenspanneinrichtung engegen der durch die Feder aufgebrachten Spannkraft ausgelenkt wird, was zu einer geringeren Spannung des Treibriemens und damit zu einem verschlechterten Antrieb des Fahrzeugmotors durch den als elektrischer Antrieb betriebenen Generator aufgrund von auftretendem Schlupf führt. Um diese in der Startphase auftretende verringerte Spannung des Treibriemens zu kompensieren, müßte die Riemenspannung insgesamt erhöht werden, wobei dann die - im "normalen" Generatorbetrieb eigentlich unerwünschte - höhere Spannung des Treibriemens zu einem vorzeitigen Verschleiß von Treibriemen, Riemenscheiben und Nebenaggregaten führen Würde.

Die bekannte Spanneinrichtung für Zugmittel, insbesondere Riemenspannerrichtung, von der die Erfindung ausgeht (vgl. die US - A - 4,886,482 und die GB 293,227 A), ist derart auszugestaltet, daß die eingestellte Vorspannung des Zugmittels im wesentlichen unverändert bleibt, unabhängig davon, ob die Spanneinrichtung im Leertrum oder - kurzzeitig - im Lasttrum angeordnet ist. Das ist dadurch erreicht, daß eine Sperreinrichtung vorgesehen ist, die eine Schwenkbewegung des Rollenträgers gegenüber dem Aufnahme- und Befestigungsgehäuse in eine erste Richtung ermöglicht, in eine zweite, entgegengesetzte Richtung jedoch begrenzt bzw. verhindert. Die erste Richtung, in der eine Schwenkbewegung des Rollenträgers gegenüber dem Aufnahme- und Befestigungsgehäuse möglich ist, ist dabei die Richtung, in der der Rollenträger auch durch die Spannkraft der Feder gegen den Treibriemen gedrückt wird. Dabei wird das gewollte automatische Nachspannen des Treibriemens durch den Riemenspanner nicht behindert. Dagegen wird eine Schwenkbewegung des Rollenträgers in die entgegengesetzte Richtung durch die Sperreinrichtung verhindert, so daß die Riemenspanneinrichtung bei einem Betrieb eines Riemen-Starter-Generators als elektrischer Antrieb nicht entgegen der Spannkraft der Feder zurückgezogen wird. Dadurch wird eine Verringerung der Riemenspannung verhindert, selbst wenn sich die Riemenspanneinrichtung im Lasttrum befindet.

Im einzelnen weist die Sperreinrichtung eine mit dem Aufnahme- und Befestigungsgehäuse verbundene Nockenscheibe mit mindestens einem Nocken auf und ist der Rollenträger mit einem äußeren Laufring verbunden, in dem ein oder mehrere Klemmkörper angeordnet sind, wobei durch Kraftschluß zwischen der Nockenscheibe, den Klemmkörpern und der inneren Mantelfläche des äußeren Laufrings eine Schwenkbewegung des Rollenträgers gegenüber dem Aufnahme- und Befestigungsgehäuse in die zweite Richtung begrenzt bzw. verhindert wird. Durch die Anordnung von Nockenscheibe und Klemmkörpern in dem äußeren Laufring ist somit zwischen dem feststehenden Aufnahme- und Befestigungsgehäuse und dem schwenkbaren Rollenträger eine Art Freilauf-Kupplung realisiert, wobei jedoch in der zweiten Schwenkrichtung keine Mitnahme des ortsfesten Aufnahme- und Befestigungsgehäuses sondern eine Schwenksperrung des Rollenträgers erfolgt.

Bei der erfindungsgemäßen Spanneinrichtung weisen die Klemmkörper je eine Bohrung auf, in die je ein stiftförmiger Mitnehmer einreift, wobei die Klemmkörper durch ein Verschwenken der Mitnehmer so innerhalb des äußeren Laufrings verschwenkbar sind, daß die Klemmkörper mit der Nockenscheibe und der inneren Mantelfläche des äußeren Laufrings durch Kraftschluß zusammenwirken. Dadurch wird ein "schaltbarer" Freilauf realisiert, bei dem die durch die Nockenscheibe, die Klemmkörper und den äußeren Laufring realisierte Sperreinrichtung zwischen Freilauf und Sperrwirkung schaltbar ist. Die erfindungsgemäße Riemenspanneinrichtung wirkt entweder wie ein "normaler" Riemenspanner, bei dem der Rollenträger - jedenfalls über einen begrenzten Winkelbereich - in beide Richtungen gegenüber dem Aufnahme- und Befestigungsgehäuse schwenkbar gelagert ist, oder wie eine feste Spannrolle, bei der ein Verschenken des Rollenträgers gegenüber dem Aufnahme- und Befestigungsgehäuse verhindert wird. Bei der Spanneinrichtung als Riemenspanneinrichtung im Zusammenwirken mit einem Riemen-Starter-Generator bedeutet dies, daß die Riemenspanneinrichtung dann als "normaler" Riemenspanner wirkt, wenn der Treibriemen durch den Fahrzeugmotor bzw. durch die auf der Kurbelwelle des Fahrzeugmotors sitzende Hauptriemenscheibe angetrieben wird, d.h. die Riemenspanneinrichtung sich im Leertrum befindet. Dagegen wirkt die Riemenspanneinrichtung als feste Spannrolle, wenn der Riemen-Starter-Generator als elektrischer Antrieb genutzt wird, somit die zu dem Generator gehörende Riemenscheibe den Treibriemen antreibt, so daß sich die Riemenspanneinrichtung im Lasttrum befindet.

Die erfindungsgemäße Riemenspanneinrichtung stellt somit einen "intelligenten" Riemenspanner dar, der nur in der zeitlich kurzen Phase, in der der Riemen-Starter-Generator als elektrischer Antrieb genutzt wird, die Funktion einer festen Spannrolle übernimmt, während die Riemenspanneinrichtung ansonsten als "normaler" Riemenspanner fungiert.

Gemäß einer vorteilhaften Ausgestaltung der erfindungsgemäßen Spanneinrichtung ist - wie an sich im Stand der Technik bekannt - eine Dämpfungseinrichtung vorgesehen, wobei die Dämpfungseinrichtung eine Dämpfungsbuchse aufweist und mittels Reibung Bewegungen zwischen dem Rollenträger und dem Aufnahme- und Befestigungsgehäuse derart dämpft, daß die Dämpfung in Richtung ansteigender Spannkraft größer ist als in Richtung abfallender Spannkraft. Eine Riemenspanneinrichtung mit einer solchen Dämpfungseinrichtung ist beispielsweise aus der EP 0 294 919 bekannt, wobei dort die Dämpfungseinrichtung aus einer Dämpfungsbuchse und ein um die Dämpfungsbuchse gelegtes Band, dessen erstes Ende starr mit dem Aufnahme- und Befestigungsgehäuse verbunden ist und dessen anderes Ende mit einer Federkraft beaufschlagt ist, besteht.

Bevorzugterweise ist die Dämpfungseinrichtung jedoch so ausgebildet, wie dies in der nachveröffentlichten DE 101 31 916 beschrieben ist, ist nämlich zur Aufbringung der Reibungskraft auf die Dämpfüngsbuchse eine Bandfeder vorgesehen, wobei die Bandfeder mit ihrem ersten Ende drehfest am Aufnahme- und Befestigungsgehäuse oder am Rollenträger und mit ihrem zweiten Ende drehfest an der Dämpfungsbuchse befestigt ist.

Im einzelnen gibt es nun eine Vielzahl von Möglichkeiten, die erfindungsgemäße Riemenspanneinrichtung auszugestalten und weiterzubilden. Dazu wird verwiesen auf die dem Patentanspruch 1 nachgeordneten Patentansprüche und auf die Beschreibung bevorzugter Ausführungsbeispiele in Verbindung mit der Zeichnung. In der Zeichnung zeigen
- Fig. 1: eine schematische Darstellung eines Riemengetriebes in einem Kraft- fahrzeug,
- Fig. 2: eine Draufsicht auf ein erstes bevorzugtes Ausführungsbeispiel einer erfindungsgemäßen Riemenspanneinrichtung, im teilmontierten Zu- stand, und
- Fig. 3: einen Längsschnitt durch die Riemenspanneinrichtung nach Fig. 2.

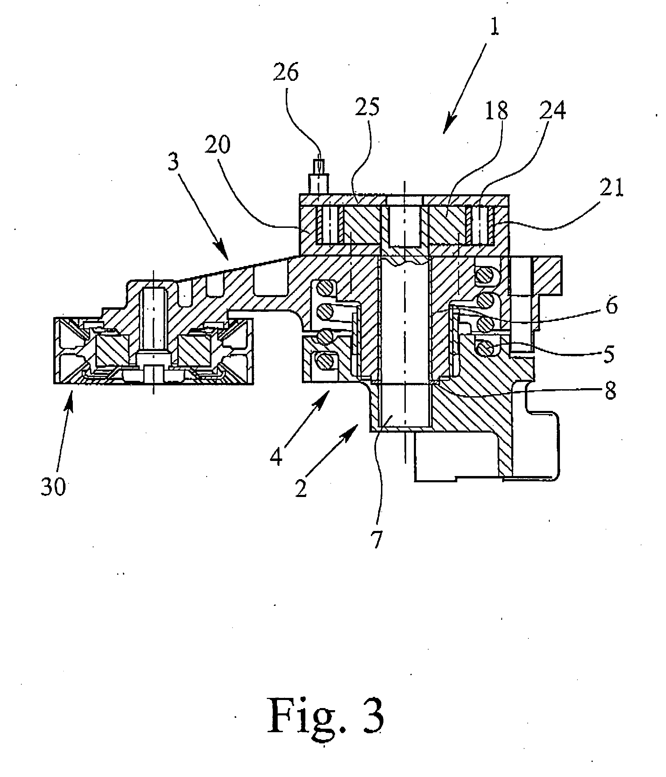

Die Figuren zeigen eine Spanneinrichtung für Zugmittel, nämlich eine Riemenspanneinrichtung 1. Zu dieser Riemenspanneinrichtung 1 gehören zunächst ein Aufnahme- und Befestigungsgehäuse 2, ein mit dem Aufnahme- und Befestigungsgehäuse 2 schwenkbar verbundener Rollenträger 3 mit einer Rolle 30, ein den Rollenträger 3 gegenüber dem Aufnahme- und Befestigungsgehäuse 2 radial und axial lagerndes Lager 4 und eine zwischen dem Rollenträger 3 und dem Aufnahme- und Befestigungsgehäuse 2 vorgesehene Feder 5 in Form einer Schraubenfeder zum Aufbringen der Spannkraft. Wie beispielsweise aus der Fig. 3 zu entnehmen ist, besteht das den Rollenträger 3 gegenüber dem Aufnahme- und Befestigungsgehäuse 2 radial und axial lagemde Lager 4 aus einer mit dem Rollenträger 3 verbundenen Lagerbuchse 6 und einem mit dem Aufnahme- und Befestigungsgehäuse 2 verbundenen Lagerbolzen 7. Die Lagerbuchse 6 ihrerseits besteht aus einer hier nicht näher dargestellten, der radialen Lagerung dienenden Lagerhülse und einem der axialen Lagerung dienenden Lagerbund 8.

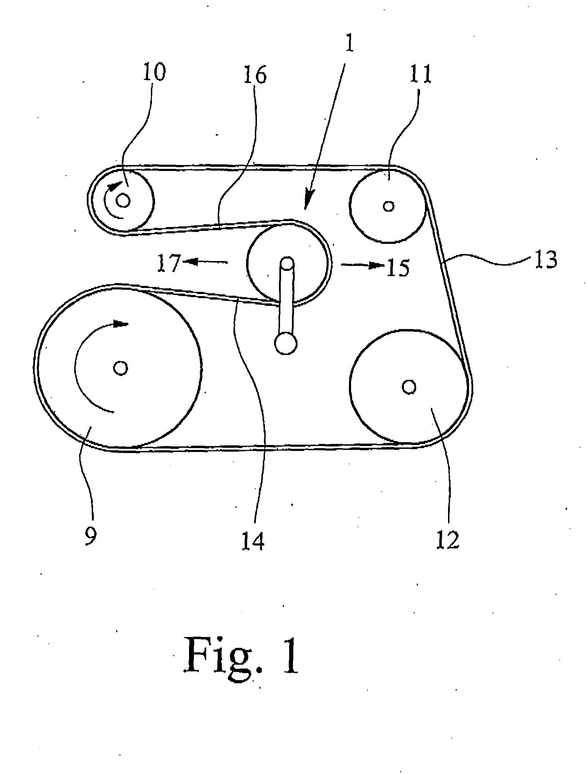

Das in Fig. 1 nur schematisch dargestellte Riemengetriebe weist eine auf der Kurbelwelle eines Fahrzeugmotors sitzende Hauptriemenscheibe 9, eine zweite Riemenscheibe 10, die über eine Kurbelwelle mit einem Riemen-Starter-Generator verbunden ist, sowie zwei weitere Riemenscheiben 11, 12 auf, die mit weiteren Nebenaggregaten verbunden sind. Bei diesen Nebenaggregaten kann es sich beispielsweise um eine Wasserpumpe oder eine Servopumpe handeln. Die einzelnen Riemenscheiben 9 bis 12 sind über einen endlosen Treibriemen 13 so miteinander verbunden, daß der Treibriemen 13, der im Normalbetrieb des Kraftfahrzeugs über den Fahrzeugmotor bzw. die Hauptriemenscheibe 9 angetrieben wird, die übrigen Riemenscheiben 10, 11 und 12 antreibt. Im Normalbetrieb des Fahrzeugs, bei dem die Hauptriemenscheibe 9 des Fahrzeugmotors den Treibriemen 13 antreibt, befindet sich die - hier nur schematisch dargestellte - Riemenspanneinrichtung 1 somit im Leertrum 14 des Treibriemens 13. In diesem Betriebszustand erfolgt ein Spannen des Treibriemens 13 durch die Riemenspanneinrichtung 1 dadurch, daß der Rollenträger 3 durch die Feder 5 gespannt ist, so daß der Rollenträger 3 gegen den Treibriemen 13 in eine erste Richtung 15 drückt.

Wird zum Starten des Fahrzeugmotors der Riemen-Starter-Generator als elektrischer Antrieb genutzt, so daß der Treibriemen 13 durch die Riemenscheibe 10 angetrieben wird, so befindet sich die Riemenspanneinrichtung 1 nunmehr im Lasttrum 16 des Treibriemens 13. Dadurch wird die Riemenspanneinrichtung 1 entgegen der Kraft der Feder 5 von dem Treibriemen 13 in die zweite, entgegengesetzte Richtung 17 gezogen, wodurch sich die Spannung des Treibriemens 13 verringert.

Weiter ist vorgesehen, daß die Riemenspanneinrichtung 1 eine Sperreinrichtung aufweist, die eine Schwenkbewegung des Rollenträgers 3 gegenüber dem Aufnahme- und Befestigungsgehäuse 2 in die erste Richtung 15 ermöglicht, in die zweite, entgegengesetzte Richtung 17 jedoch begrenzt bzw. verhindert.

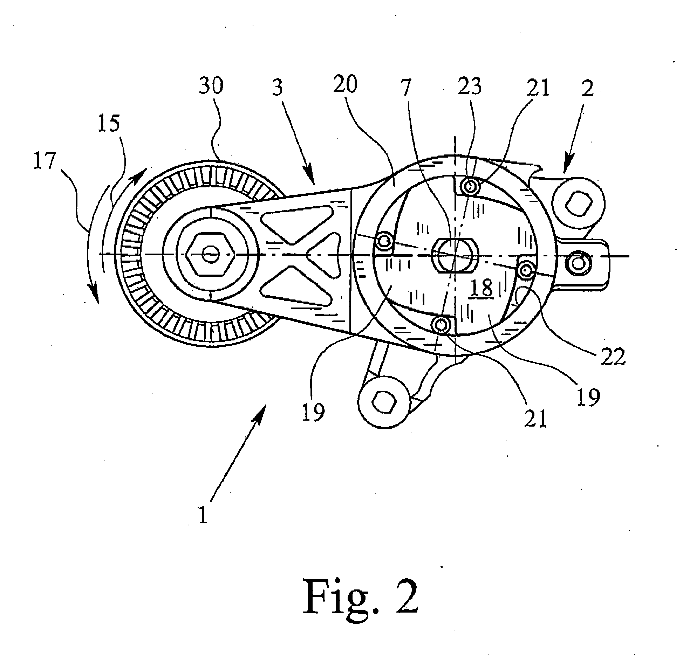

Die Fig. 2 und 3 zeigen eine Ausführungsform einer solchen Riemenspanneinrichtung 1, bei der ein kraftschlüssiger Sperrmechanismus zwischen dem Aufnahme- und Befestigungsgehäuse 2 und dem Rollenträger 3 realisiert ist. Die Sperreinrichtung besteht dabei aus einer mit dem Aufnahme- und Befestigungsgehäuse 2 verbundenen Nockenscheibe 18, mit insgesamt vier Nocken 19, und aus einem mit dem Rollenträger 3 verbundenen äußeren Laufring 20, in dem vier Klemmkörper 21 angeordnet sind. Durch die Anordnung der hier als Wälzkörper ausgebildeten Klemmkörper 21 zwischen der Nockenscheibe 18 und der inneren Mantelfläche 22 des äußeren Laufrings 20 ist ein Verschwenken des Rollenträgers 3 in die erste Richtung 15 möglich, während es bei einem Verschenken des Rollenträgers 3 in die andere Richtung 17 zu einem Kraftschluß zwischen der Nockenscheibe 20, den Klemmkörpern 21 und der inneren Mantelfläche 22 des äußeren Laufrings 20 kommt.

Der bei dieser Ausführungsform realisierte kraftschlüssige Sperrmechanismus funktioniert somit nach Art eines Freilaufes, wobei jedoch bei einem Verschwenken des Rollenträgers 3 in die zweite Richtung 17 keine Mitnahme des Aufnahme- und Befestigungsgehäuses 2 erfolgt, da diese ortsfest angeordnet ist, so daß es zu einem Sperren des Rollenträgers 3 beim Verschwenken in diese Richtung 17 kommt. Vergleicht man den in den Fig. 2 und 3 dargestellten Sperrmechanismus mit einer Freilauf-Kupplung, so kann der Sperrmechanismus auch als Radial-Außenfreilauf und die Nockenscheibe 18 als Außenstern bezeichnet werden.

Wird das in Fig. 1 dargestellte Riemengetriebe durch den als elektrischen Antrieb genutzten Riemen-Starter-Generator angetrieben, so verhindert der Sperrmechanismus, daß die Riemenspanneinrichtung 1 entgegen der Vorspannkraft ihrer Feder 5 in die Richtung 17 gezogen wird.

Die in Fig. 2 dargestellten Klemmkörper 21 weisen jeweils eine Bohrung 23 auf, in die je ein stiftförmiger Mitnehmer 24 eingreift. Die insgesamt vier Mitnehmer 24 sind an einem in Fig. 3 dargestellten Deckel 25 angeordnet, der relativ zum Rollenträger 3 schwenkbar auf dem Lagerbolzen 7 geführt ist. Das Verschwenken des Deckels 25 und damit auch der stiftförmigen Mitnehmer 24 kann beispielsweise mit Hilfe eines - hier nicht dargestellten - Elektromagneten gesteuert werden, der an einem am Deckel befestigten Arm 26 angreift, wodurch der zuvor beschriebene Sperrmechanismus ein- bzw. ausschaltbar ist.

Im Normalbetrieb des Riemengetriebes, bei dem der Treibriemen 13 durch die Hauptriemenscheibe 9 des Fahrzeugmotors angetrieben wird, ist dann der Deckel 25 so verschwenkt, daß durch die in die Bohrungen 23 eingreifenden Mitnehmer 24 die Klemmkörper 21 derart zwischen der Nockenscheibe 18 und der inneren Mantelfläche 22 des äußeren Laufrings 20 positioniert sind, daß ein Verschwenken des Rollenträgers 3 in die Richtung 15 möglich ist, da die Klemmkörper 21 entlang der inneren Mantelfläche 22 des äußeren Laufrings 20 abrollen und es nicht zu einem Kraftschluß zwischen Nockenscheibe 18, Klemmkörper 21 und äußerem Laufring 20 kommt. Je nach Abmessung und Stellung der Klemmkörper 21 ist sogar- jedenfalls für einen geringen Schwenkwinkel - ein Verschwenken in beide Richtungen 15, 17 möglich ist. Der Sperrmechanismus ist somit nicht wirksam, so daß die Riemenspanneinrichtung 1 wie ein "normaler" Riemenspanner wirkt. Wird dagegen das Riemengetriebe von der Riemenscheibe 10 des Riemen-Starter-Generators angetrieben, so wird der Deckel 25 so verschwenkt, daß die Klemmkörper 21 so zwischen Nockenscheibe 18 und innerer Mantelfläche 22 des äußeren Laufrings 20 angeordnet sind, daß es dann, wenn der Rollenträger 3 durch den Treibriemen 13 in die zweite Richtung 17 gezogen wird, zu einem Kraftschluß zwischen der Nockenscheibe 18, den Klemmkörpern 21 und dem äußerem Laufring 20 kommt. Die Riemenspanneinrichtung 1 wirkt dann wie eine feste Spannrolle.

## Patentansprüche

1. Spanneinrichtung für Zugmittel, insbesondere Riemenspanneinrichtung, mit einem Aufnahme- und Befestigungsgehäuse (2), mit einem mit dem Aufnahme- und Befestigungsgehäuse (2) schwenkbar verbundenen Rollenträger (3), mit einem den Rollenträger (3) gegenüber dem Aufnahme- und Befestigungsgehäuse (2) lagernden Lager (4) und mit einer zwischen dem Rollenträger (3) und dem Aufnahme- und Befestigungsgehäuse (2) vorgesehenen Feder (5) zum Aufbringen der Spannkraft, wobei eine Sperreinrichtung vorgesehen ist, die eine Schwenkbewegung des Rollenträgers (3) gegenüber dem Aufnahme- und Befestigungsgehäuse (2) in eine erste Richtung (15) ermöglicht, in eine zweite, entgegengesetzte Richtung (17) jedoch begrenzt bzw. verhindert, wobei die Sperreinrichtung eine mit dem Aufnahme- und Befestigungsgehäuse (2) verbundene Nockenscheibe (18) mit mindestens einem Nocken (19) aufweist und wobei der Rollenträger (3) mit einem äußeren Laufring (20) verbunden ist, in dem ein oder mehrere Klemmkörper (21) angeordnet sind, wobei durch Kraftschluß zwischen der Nockenscheibe (18), den Klemmkörpem (21) und der inneren Mantelfläche (22) des äußeren Laufrings (20) eine Schwenkbewegung des Rollenträgers (3) gegenüber dem Aufnahme- und Befestigungsgehäuse (2) in die zweite Richtung (17) begrenzt bzw. verhindert wird,
**dadurch gekennzeichnet,**
**daß** die Klemmkörper (21) je eine Bohrung (23) aufweisen, in die je ein Mitnehmer (24) eingreift, wobei die Klemmkörper (21) durch ein Verschwenken der Mitnehmer (24) so innerhalb des äußeren Laufrings (20) verschwenkbar sind, daß die Klemmkörper (21) mit der Nockenscheibe (18) und der inneren Mantelfläche (22) des äußeren Laufrings (20) durch Kraftschluß zusammenwirken.

2. Spanneinrichtung nach Anspruch 1, **dadurch gekennzeichnet, daß** die Klemmkörper (21) als Wälzkörper ausgebildet sind.

3. Spanneinrichtung nach Anspruch 1 oder 2, **dadurch gekennzeichnet, daß** eine Dämpfungseinrichtung vorgesehen ist, wobei die Dämpfungseinrichtung eine Dämpfüngsbuchse aufweist und mittels Reibung Bewegungen zwischen dem Rollenträger (3) und dem Aufnahme- und Befestigungsgehäuse (2) derart dämpft, daß die Dämpfung in Richtung ansteigender Spannkraft größer ist als in Richtung abfallender Spannkraft.

4. Spanneinrichtung nach Anspruch 3, **dadurch gekennzeichnet, daß** zur Aufbringung der Reibungskraft auf die Dämpfungsbuchse eine Bandfeder vorgesehen ist und die Bandfeder mit ihrem ersten Ende drehfest am Aufnahme- und Befestigungsgehäuse (2) oder am Rollenträger (3) und mit ihrem zweiten Ende drehfest an der Dämpfüngsbuchse befestigt ist.

## Claims

1. Tensioning means for traction mechanisms, in particular a belt tensioning device having a receiving and mounting housing (2), a pulley carrier (3) pivotally connected to the receiving and mounting housing (2), a bearing (4) supporting the pulley carrier (3) relative to the receiving and mounting housing (2) and a spring (5) positioned between the pulley carrier (3) and the receiving and mounting housing (2) for applying a tensioning force, wherein a blocking means is provided for permitting a pivoting motion of the pulley carrier relative to the receiving and mounting housing (2) in a first direction (15) and for at least limiting or preventing pivoting motion in an opposite, second direction (17), wherein the blocking means has a cam disk (18) having at least one cam surface (19) connected to the receiving and mounting housing (2) and wherein the pulley carrier (3) is connected to an outer ball race (20) having one or multiple clamp bodies (21), wherein a frictional connection between the cam disk (18), the clamp bodies (21) and an inner jacket surface (22) of the outer ball race (20) is used to at least limit or prevent the pivoting motion of the pulley carrier (3) relative to the receiving and mounting housing (2) in the second direction (17)
**characterized in**
**that** each of the clamp bodies (21) has a hole (23) into which a driver (24) fits, wherein the clamp bodies (21) are rotatable within the outer ball race (20) using a rotation of the driver (24) so that the clamp bodies (21) interact with the cam disk (18) and the inner jacket surface (22) of the outer ball race (20) using frictional adhesion.

2. Tensioning means according to claim 1, **characterized in that** the clamp bodies (21) are designed as roller bodies.

3. Tensioning means according to claim 1 or 2, **characterized in that** a damping means is provided, wherein the damping means has a damping sleeve, which, by means of friction damping, dampens movement between the pulley carrier (3) and the receiving and mounting housing (2) such that damping in a direction of rising tensioning force is greater than damping in a direction of decreasing tensioning force.

4. Tensioning means according to claim 3, **characterized in that** a band spring is provided for applying a friction force to the damping sleeve and the band spring is torsionally attached with its first end to the receiving and mounting housing (2) or to the pulley carrier (3) and with its second end to the damping sleeve.

## Revendications

1. Tendeur pour moyen de traction, en particulier tendeur de courroie, comprenant un boîtier de réception et de fixation (2), un support à rouleaux (3) connecté de manière pivotante au boîtier de réception et de fixation (2), un palier (4) supportant le support à rouleaux (3) par rapport au boîtier de réception et de fixation (2), et un ressort (5) prévu entre le support à rouleaux (3) et le boîtier de réception et de fixation (2), un dispositif de verrouillage étant prévu pour l'application de la force de tensionnement, lequel permet un mouvement de pivotement du support à rouleaux (3) par rapport au boîtier de réception et de fixation (2) dans une première direction (15), mais limite ou empêche ce mouvement de pivotement dans une deuxième direction opposée (17), le dispositif de verrouillage présentant un disque de came (18) connecté au boîtier de réception et de fixation (2) et comprenant au moins une came (19), le support à rouleaux (3) étant connecté à une bague de roulement extérieure (20), dans laquelle sont disposés un ou plusieurs corps de serrage (21), un mouvement de pivotement du support à rouleaux (3) par rapport au boîtier de réception et de fixation (2) dans la deuxième direction (17) étant limité ou empêché par l'engagement par force entre le disque de came (18), les corps de serrage (21) et la surface d'enveloppe intérieure (22) de la bague de roulement extérieure (20),
**caractérisé en ce que**
les corps de serrage (21) présentent chacun un alésage (23), dans lequel à chaque fois un moyen d'entraînement (24) vient en prise, les corps de serrage (21) pouvant pivoter à l'intérieur de la bague de roulement extérieure (20) par un pivotement des moyens d'entraînement (24) de telle sorte que les corps de serrage (21) coopèrent avec le disque de came (18) et la surface d'enveloppe intérieure (22) de la bague de roulement extérieure (20) par engagement par force.

2. Tendeur selon la revendication 1, **caractérisé en ce que** les corps de serrage (21) sont réalisés sous forme de corps de roulement.

3. Tendeur selon la revendication 1 ou 2, **caractérisé en ce que** l'on prévoit un système d'amortissement, le système d'amortissement présentant une douille d'amortissement et amortissant par frottement les mouvements entre le support à rouleaux (3) et le boîtier de réception et de fixation (2) de telle sorte que l'amortissement dans la direction de la force de tensionnement croissante soit plus important que dans la direction de la force de tensionnement décroissante.

4. Tendeur selon la revendication 3, **caractérisé en ce que** pour appliquer la force de frottement sur la douille d'amortissement, on prévoit un ressort à bande et le ressort à bande est fixé avec sa première extrémité de manière solidaire en rotation sur le boîtier de réception et de fixation (2) ou sur le support à rouleaux (3) et avec sa deuxième extrémité de manière solidaire en rotation à la douille d'amortissement.
